# EUROPEAN PATENT APPLICATION

(11) **EP 4 376 378 A1**
(43) Date of publication of application: **29.05.2024**
(21) Application number: 23205080.7
(22) Date of filing: 23.10.2023
(51) Int. Cl.: H04L 45/42, H04L 45/02, H04L 47/70, H04L 41/08

(54) **NETWORK DEVICE, TIME-SENSITIVE NETWORK SYSTEM AND AUTO-CONFIGURATION METHOD THEREOF**

(30) Priority: 24.11.2022 US 202263427840 P; 16.10.2023 US 202318380629
(71) Applicant: Moxa Inc., New Taipei City 242 (TW)
(72) Inventor: Ko, Yueh-Ming, New Taipei City 242 (TW); Lin, Chun-Yu, New Taipei City 242 (TW); Huang, Tzu-Lun, New Taipei City 242 (TW)
(74) Representative: Straus, Alexander

(57) **Abstract**

An auto-configuration method for a time-sensitive networking system (10) includes obtaining, by a first OPC UA client module (200), a TSN configuration of a stream; transmitting, by the first OPC UA client module (200), the TSN configuration to an OPC UA server module (210) of a centralized user configuration (110), called CUC hereinafter, in the TSN system (10); obtaining, by the CUC (110), a routing information and scheduling of the stream according to the TSN configuration and a network topology; sending, by the first OPC UA client module (200), a request to the OPC UA server module (210) to obtain the routing information and scheduling of the stream; and configuring the routing information and scheduling of the stream to a plurality of end stations (130, 132) in the TSN system (10) after the plurality of end stations (130, 132) are online.

## Description

### Field of the Invention

The present invention relates to a network device, a time-sensitive network system and an auto-configuration method thereof, and more particularly, to a network device, a time-sensitive network system and an auto-configuration method thereof capable of determining configuration of the time-sensitive network system off-line.

### Background of the Invention

In industrial field, some applications have strict timing requirements that must be guaranteed with end-to-end latency. The time-critical application streams need to be scheduled and routed in a network that may include best-effort traffic and other traffic with different quality of service (QoS) requirements. Nowadays, time-sensitive networking (TSN) technology is a key solution to satisfy this critical requirement. However, how to configure the end stations and network devices to meet the deterministic latency requirement in the TSN network is a complicated and time-consuming task.

In the fully centralized model of the TSN network, the routing and scheduling of the TSN data streams are generally based on the TSN-related parameters stored in the end stations. However, the TSN standards do not specifically define how a centralized user configuration (CUC) obtains these TSN related parameters. In the prior art, the well-known client/server architecture of protocols such as NETCONF is used to realize the method for the CUC to obtain relevant parameters from the end stations. PTCC (PubSub TSN Centralized Configuration) is also proposed in the proposal for OPC UA Companion Specification, which defines the configuration interface between the CUC and the OPC UA PubSub end stations. However, the methods in the prior art are only applicable when the end stations are in an online state, so they cannot meet the requirements of the offline state such as planning, design or commission phases of the configuration workflows.

### Summary of the Invention

Therefore, the present invention is to provide a network device, a time-sensitive network system and an auto-configuration method thereof capable of determining a configuration in TSN off-line during the planning, design and commission phases of the configuration workflows.

This is achieved by an auto-configuration method according to the independent claim 1, a time-sensitive networking (TSN) system according to the independent claim 2 or a network device in a time-sensitive networking system according to the independent claim 3 here below. The dependent claims pertain to corresponding further developments and improvements.

As will be seen more clearly from the detailed description following below, an auto-configuration method is disclosed herein. The auto-configuration method, which is used in a time-sensitive networking (TSN) system, includes obtaining, by a first OPC UA client module, a TSN configuration of a stream; transmitting, by the first OPC UA client module, the TSN configuration to an OPC UA server module of a centralized user configuration (CUC) in the TSN system; obtaining, by the CUC, a routing information and scheduling of the stream according to the TSN configuration and a network topology; sending, by the first OPC UA client module, a request to the OPC UA server to obtain the routing information and scheduling of the stream; and configuring the routing information and scheduling of the stream to a plurality of end stations in the TSN system.

In another aspect of the invention, a TSN system for an auto-configuration method is disclosed in the detailed description here below. The TSN system comprises a first OPC UA client module; a centralized user configuration (CUC) with an OPC UA server module; and a plurality of end stations. The auto-configuration method comprises obtaining, by the first OPC UA client module, a TSN configuration of a stream; transmitting, by the first OPC UA client module, the TSN configuration to the OPC UA server module of the CUC; obtaining, by the CUC, a routing information and scheduling of the stream according to the TSN configuration and a network topology; sending, by the first OPC UA client module, a request to the OPC UA server to obtain the routing information and scheduling of the stream; and configuring the routing information and scheduling of the stream to the plurality of end stations.

In another aspect of the invention, a network device in a TSN system is disclosed in the detailed description here below. The network device, which is configured to have a first OPC UA client module, includes a processing unit and a storage unit. The processing unit is configured to execute a program code. The storage unit is coupled to the processing unit and configured to store the program code to instruct the processing unit to execute an auto-configuration method. The auto-configuration method comprises obtaining, by the first OPC UA client module, a TSN configuration of a stream; transmitting, by the first OPC UA client module, the TSN configuration to an OPC UA server module of a centralized user configuration (CUC) in the TSN system; sending, by the first OPC UA client module, a request to the OPC UA server to obtain routing information and scheduling of the stream; and configuring the routing information and scheduling of the stream to a plurality of end stations in the TSN system.

### Brief Description of the Drawings

FIG. 1 is a schematic diagram of a TSN system.
FIG. 2 is a schematic diagram of a TSN system with OPC UA server/client model according to an embodiment of the present invention.
FIG. 3A and FIG. 3B are schematic diagrams of a simplified TSN QoS configuration information model according to an embodiment of the present invention.
FIG. 4 is a schematic diagram of an auto-configuration process according to an embodiment of the present invention.
FIG. 5 is a schematic diagram of a TSN system configured through an engineering tool according to an embodiment of the present invention.
FIG. 6 is a schematic diagram of the TSN system 10 configured through a master controller according to an embodiment of the present invention.
FIG. 7 is a schematic diagram of a TSN system with a plurality of engineering tools according to an embodiment of the present invention.
FIG. 8A and FIG. 8B are a flowchart of the TSN system executing an auto-configuration process according to an embodiment of the present invention.
FIG. 9 is a schematic diagram of a network device according to an embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

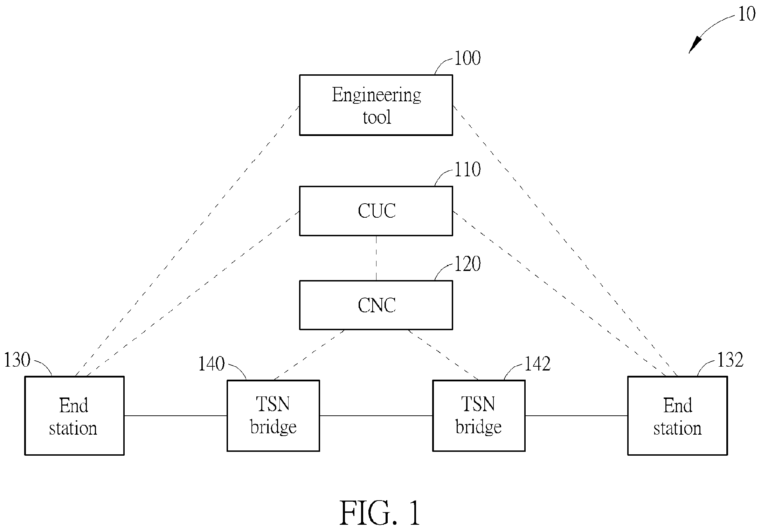

Please refer to FIG. 1, which is a schematic diagram of a TSN system 10. The TSN system 10 complies with a standard of fully centralized model of TSN, and may be simply composed of a centralized user configuration (CUC) 110, a centralized network configuration (CNC) 120, two end stations 130, 132 and two TSN bridges 140, 142. The end stations 130, 132 and the TSN bridges 140, 142 may be connected by physical links, and the end stations 130, 132 may execute time-aware applications that require deterministic communication.

In FIG. 1, the CUC 110, the CNC 120, the end stations 130, 132 and the TSN bridges 140, 142 are simply used to illustrate the architecture of the TSN system 10. In practical, the end stations 130, 132 may be and not limited to a robot, a sensor, or a programmable logical controller, etc., and may execute end-to-end communications with other end stations. In other words, the end stations 130, 132 may be a source node (talker) or a destination node (listener) of a stream defined by a plurality of TSN parameters such as size, period, priority, offset/type, deadline. It should be noted that the end stations 130, 132 may be listeners of one stream while being talkers of another stream, and the different QoS requirements of the different streams in TSN should be met in the end-to-end communication. In general, the various QoS requirements of streams may be stored in the end stations 130, 132 as bases for scheduling and routing of the streams.

The CUC 110 may communicate with the CNC 120 and the end stations 130, 132 to obtain the QoS requirements of the streams from the end stations 130, 132 and the scheduling and routing configuration thereof from the CNC 120. In general, the CUC 110 may collect the QoS requirements (TSN QoS parameters) from the end stations 130, 132 and execute a topology discovery to obtain the network topology of the TSN system 10, and thereby request the scheduling and routing configuration from the CNC 120. However, the procedures may be merely available when the whole TSN system 10 is running online in current technology.

The CNC 120 is a centralized component that calculates the network routing and scheduling and configures network resources. The CNC 120 may communicate with the CUC 110 and the TSN bridges 140, 142 to obtain the QoS requirements of the streams from the CUC 110 and configure the TSN bridges 140, 142. In other words, the CNC 120 performs stream scheduling and routing calculation according to the QoS requirement and network topology obtained from the CUC and then applies the calculation results to the TSN bridges 140, 142 to configure the end-to-end communications.

The TSN bridges 140, 142 may be network switches that forward streams from one terminal device to another according to the scheduling configured by the CNC 120. In other words, according to the configuration configured by the CNC 120, the TSN bridges 140, 142 realize the deterministic communication in the TSN system 10.

The TSN standard defines the fully centralized model running as described above; however, the data exchange related to the QoS requirements between the CUC 110 and the end stations 130, 132 have not been specifically defined. Currently, the relevant methods proposed in the prior art focus on obtaining QoS requirements in an online state, i.e., the end stations to be configured should have been online; otherwise, the QoS requirements cannot be obtained by the CUC. In this regard, the present invention provides a centralized universal TSN QoS configuration model that incorporates engineering tools and adopts open platform communications unified architecture (OPC UA) to provide an effective and unified configuration model for the required TSN QoS configuration.

Please continue to refer to FIG. 1. As shown in FIG. 1, the TSN system 10 further comprises an engineer tool 100 that configures end stations 130 and 132 and the communication relationship therebetween during the offline engineering phase, such as planning, design or commission phases of the configuration workflow. The engineer tool 100 may be a standalone network device, or run on one of the end stations 130, 132. Specifically, configuration data, including TSN QoS parameters, may be imported into the engineering tool 100. The configuration data may be OPC UA configuration descriptors (defined in the OPC UA Part 83: UAFX Offline Engineering) or IEC/IEEE 60802 Digital Datasheet file, so that the engineering tool 100 is able to configure the end stations 130, 132. It should be noted that other industrial protocol import mechanisms may also be adopted in the embodiment of the present application. In the present invention, the engineering tool 100 not only configures the end stations 130, 132 but also facilitates obtaining the TSN QoS parameters of streams by the CUC 110.

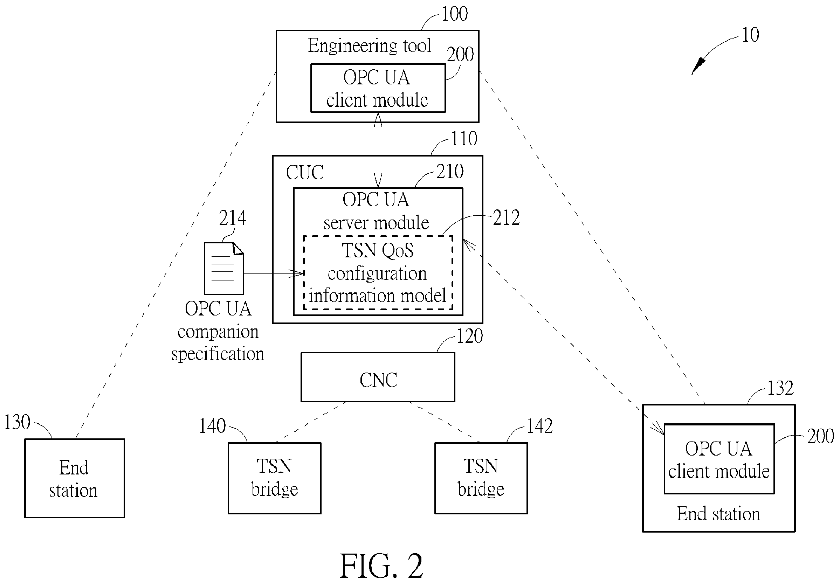

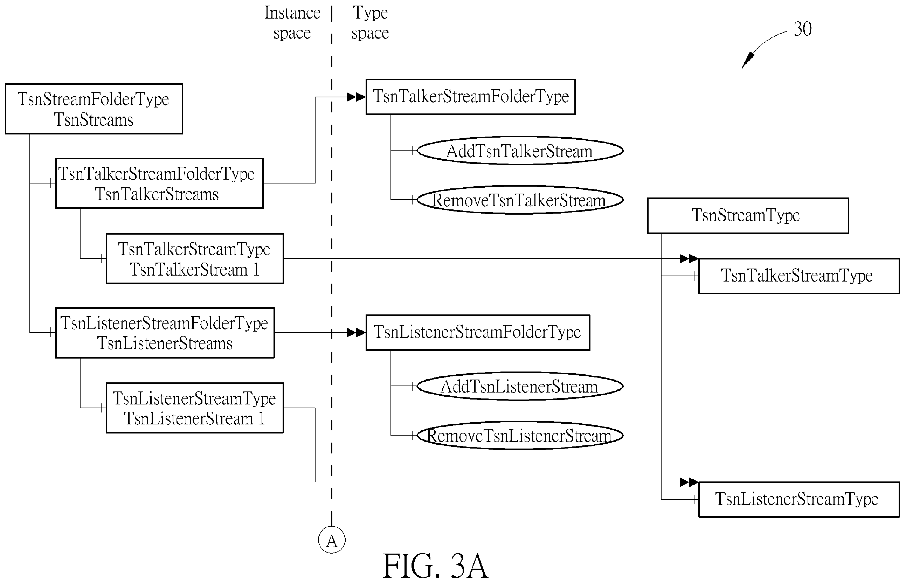

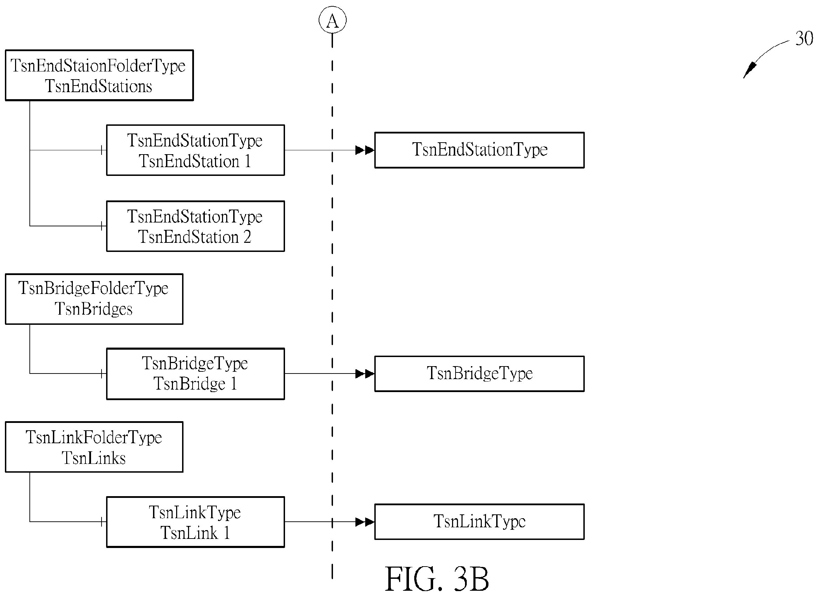

Please refer to FIG. 2, which is a schematic diagram of the TSN system 10 with OPC UA server/client model according to an embodiment of the present invention. As shown in FIG. 2, the CUC 110 has an OPC UA server module 210 and a TSN QoS configuration information model 212. The TSN QoS configuration information model 212 may be defined in a separate OPC UA companion specification 214 defining the detailed TSN QoS configuration information model, ObjectTypes, DataTypes, Objects and Methods, which may be used to realize the TSN QoS offline configuration. According to the TSN QoS configuration information model 212, the OPC UA server module 210 sets up the address space for the configuration data and provides various methods for OPC UA clients to create and retrieve these datasets. In addition to the TSN QoS parameters, the CUC 110 may also obtain a network topology of the TSN system 10 through the OPC UA server module 210. Please refer to FIG. 3A and FIG. 3B, which illustrates a simplified TSN QoS configuration information model 30 of the present invention. The TSN QoS configuration information model 30 defines the TSN QoS and topology instances in address space of the OPC UA server module 210. The TSN stream QoS datasets and network topology resources are created in the OPC UA server module 210 by the OPC UA clients through methods defined in the TSN QoS configuration information model 30.

Moreover, as shown in FIG. 2, there may be at least one OPC UA client module 200 in the TSN system 10. The OPC UA client module 200 may be deployed in the engineering tool 100 or in one of the end stations 130, 132. The OPC UA client module 200 may obtain the network topology of the TSN system 10 or the TSN QoS parameters and then transmit to the OPC UA server module 210 of the CUC 110 according to the API defined by the TSN QoS configuration information model 212. Accordingly, through the OPC UA server/client model, the CUC 110 is able to obtain the relevant information of streams from the engineering tool 100 or the end stations 130, 132. Furthermore, through the unified interface provided by the TSN QoS configuration information model 212, whether online or offline configurations, differences due to vendor-specific or other different industrial automation protocol configuration methods may be overcome.

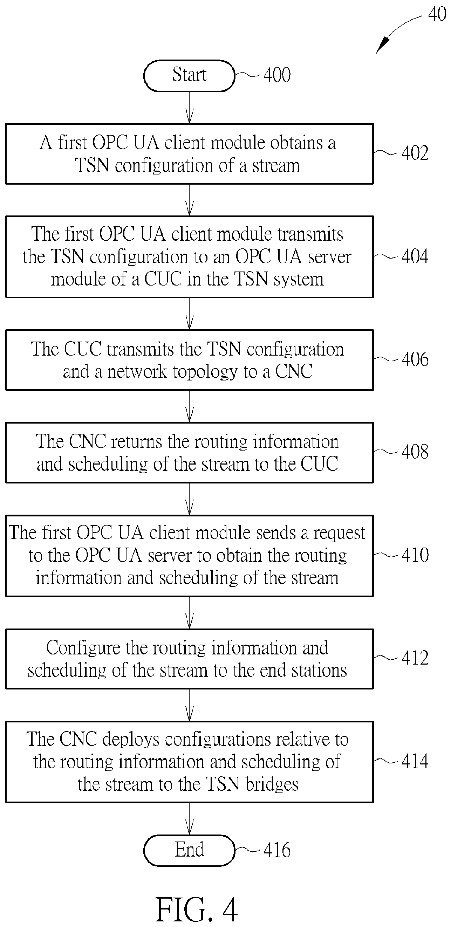

The auto-configuration method of the present invention may be summarized into an auto-configuration process 40 in FIG. 4. The auto-configuration process 40 comprises the following steps:
Step 400: Start.
Step 402: A first OPC UA client module obtains a TSN configuration of a stream.
Step 404: The first OPC UA client module transmits the TSN configuration to an OPC UA server module of a CUC in the TSN system.
Step 406: The CUC transmits the TSN configuration and a network topology to a CNC.
Step 408: The CNC returns the routing information and scheduling of the stream to the CUC.
Step 410: The first OPC UA client module sends a request to the OPC UA server to obtain the routing information and scheduling of the stream.
Step 412: Configure the routing information and scheduling of the stream to the end stations.
Step 414: The CNC deploys configurations relative to the routing information and scheduling of the stream to the TSN bridges.
Step 416: End.

According to the auto-configuration process 40, the first OPC UA client module obtains a TSN configuration of a stream (Step 402), wherein the TSN configuration comprises relevant TSN QoS parameters of the stream. Then, the first OPC UA client module transmits the obtained TSN configuration of the stream to the OPC UA server module of the CUC through APIs provided by the TSN QoS configuration information model in the CUC (Step 404). After receiving the TSN configuration through the OPC UA server module, the CUC passes the TSN configuration and the network topology of the TSN system to the CNC for routing and scheduling calculation (Step 406) . The CNC returns the calculation results of routing and scheduling to the CUC after finishing calculation (Step 408), and then the first OPC UA client module may send a request to the OPC UA server of the CUC to obtain the routing information and scheduling of the stream (Step 410). Finally, the end stations and the TSN bridges may be configured according to the obtained calculation result of the routing information and scheduling of the stream (Steps 412-414) . Accordingly, the auto-configuration for the TSN system may be completed.

Specifically, in Step 402, the first OPC UA client module obtains the TSN configuration of a stream. The TSN configuration may obtain through an engineering tool or through an end station having information of other end stations. The TSN configuration comprises the TSN QoS parameters required by the TSN system to guarantee the deterministic communication of the stream. The TSN configuration should be converted into the TSN configuration available for the first OPC UA client module in this step. It should be noted that the conversion may be vendor specific and different to different industrial protocols.

In Step 404, the first OPC UA client module transmits the obtained TSN configuration of the stream to the OPC UA server module of the CUC through APIs provided by the TSN QoS configuration information model in the CUC. The step should be executed after the client/server connection has been established. The first OPC UA client module may call methods such as addTalkerStream, addListenerStream defined in the TSN QoS configuration information model to add the TSN QoS and relevant parameters of the time-sensitive streams to the OPC UA server module, and thereby the CUC may obtain the relevant parameters.

In Step 406, the CUC passes the TSN configuration and the network topology of the TSN system to the CNC for routing and scheduling calculation. The TSN configuration and the network topology may be transmitted according to IEEE 802.1Qdj, representational state transfer (REST), or a vender specific API, but is not limited thereto.

It should be noted, before calculating the scheduling and routing of streams, the TSN control layer (such as CUC, CNC) needs to get the network topology of the TSN system with the QoS capabilities of end stations. The process to get the network topology may be achieved by importing a topology description file or creating manually by a topology generating entity (TGE) or a tool. The TGE may be used for creating static topology datasets (e.g. station name, port name, link name, etc.) the same as the topology datasets created by topology discovery entity (TDE) for online network discovery. Furthermore, the TGE may also convert OPC UA network topology objects into the topology datasets. The CUC may use the topology datasets to arrange the routing and scheduling of the streams. In the present invention, the network topology may be and not limited to being obtained by the TGE and then transmitted to the OPC UA server module of the CUC through a second OPC UA client module. For example, the second OPC UA client module may call methods such as addTsnBridge defined in the TSN QoS configuration information model to create a TSN bridge object, methods such as addTsnEndStation to create an end station object, or methods such as addTsnLink to create link between two TSN bridges, between two end stations or between a TSN bridge and an end station. It should be noted that the second OPC UA client module may be the same as the first OPC UA client module or may be deployed in a different network device (such as the engineering tool or the end station) than the first OPC UA client module.

In Step 408, the CNC returns the routing information and scheduling of the stream to the CUC. The routing information and scheduling of the stream may be transmitted according to IEEE 802.1Qdj, representational state transfer (REST), or a vender specific API, but is not limited thereto. In addition to returns the routing information and scheduling of the stream to the CUC, the CNC further updates a return status to the OPC UA server module of the CUC.

In Step 410, the first OPC UA client module sends a request to the OPC UA server to obtain the routing information and scheduling of the stream. The first OPC UA client module may check a "Program Status" of a "Program Control Method" that may be updated in Step 408, and then call methods such as getComputedResult defined in the TSN QoS configuration information model to retrieve the revised stream parameters such as TimeAwareOffset or AccumulatedLatency. Accordingly, the first OPC UA client module obtains the routing information and scheduling of the stream.

In Step 412, the end stations are configured according to the obtained calculation result of the routing information and scheduling of the stream. The first OPC UA client module may firstly check the return status of the calculation or the configuration. If the return status is a successful state, the end stations may be configured according to the routing information and scheduling of the stream when the end stations are online.

In Step 414, the CNC deploys the configurations relative to the routing information and scheduling of the stream to the TSN bridges when the TSN bridges are online. Accordingly, the configuration for the TSN system may be determined in the offline engineering phase and deployed to the devices immediately after the devices are online.

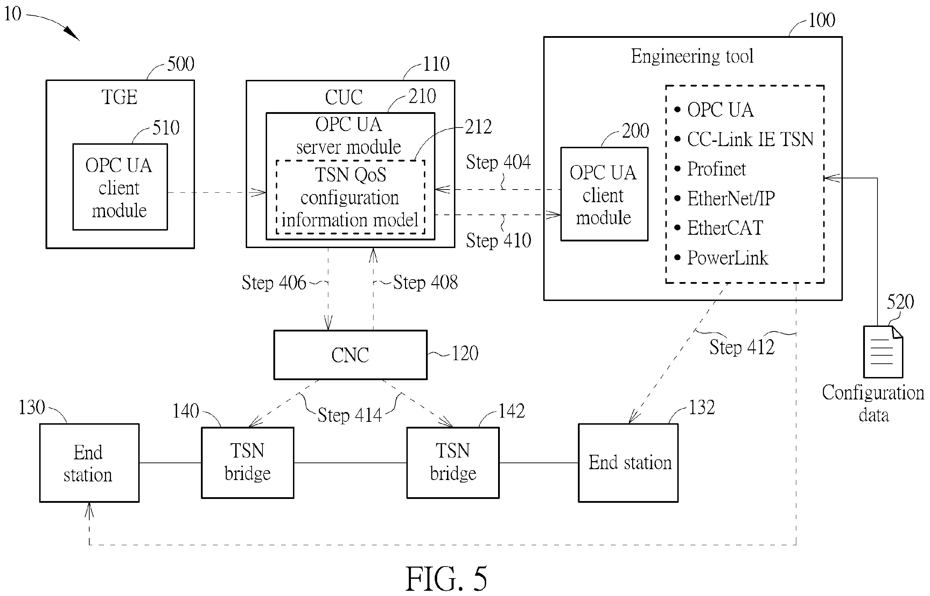

Please refer to FIG. 5, which is a schematic diagram of the TSN system 10 configured through an engineering tool according to an embodiment of the present invention. As shown in FIG. 5, the engineering tool 100 has the OPC UA client module operating therein. According to the auto-configuration process 40, in Step 402, the OPC UA client module 200 of the engineering tool 100 obtains a TSN configuration of the stream. Specifically, in this step, a configure data 520 may be imported into the engineering tool 100 first. The configure data 520 comprises the TSN QoS parameters, and may be but not limited to an OPC UA configuration descriptor or an IEC/IEEE 60802 digital data sheet. In the present embodiment, the engineering tool 100 may also adopt other import mechanisms to import the configure data 520; for example, vendor specific methods or industrial automation protocols such as PROFINET, EtherNet/IP, EtherCAT, CC-Link IE TSN, PowerLink are also applicable. After importing the configure data 520 comprising the TSN QoS parameters, the engineering tool 100 may convert the TSN QoS parameters to the TSN configuration available for the OPC UA client module 200. In addition, the TSN system 10 comprises a TGE 500 with an OPC UA client module 510. The TGE 500 creates the network topology and then transmits to the CUC 110 through the OPC UA client module 510. Then, the TSN QoS parameters and the network topology are used for obtaining the routing information and scheduling of the streams in Step 404 to Step 410 as describe above. After the CNC 120 successfully arranges the resources for the streams, the engineering tool 100 configures the end stations 130, 132 on the basis of the obtained routing information and scheduling of the stream in Step 412. The engineering tool 100 may configure the end stations 130, 132 through the OPC UA server/client mechanism therebetween, as well as through vendor specific or other industrial automation protocols such as PROFINET, EtherNet/IP, EtherCAT, CC-Link IE TSN, PowerLink, Sercos. Accordingly, the TSN system 10 may be auto-configured through the engineering tool 100 off-line. Additionally, the engineering tool 100 is capable of knowing the TSN configuration of the stream before the end stations 130 and 132 are online, so it's possible for the CNC 120 to determine the routing path and the scheduling of the stream while the end stations 130 and 132 are offline.

It should be noted, the TGE 500 is illustrated as a stand-alone network device in FIG. 5; however, the TGE 500 may be implemented as an embedded software module run on the CUC 110 or may be run on the engineering tool 100 or the end stations 130, 132 and communicated with the CUC 110 through the OPC UA client module 510.

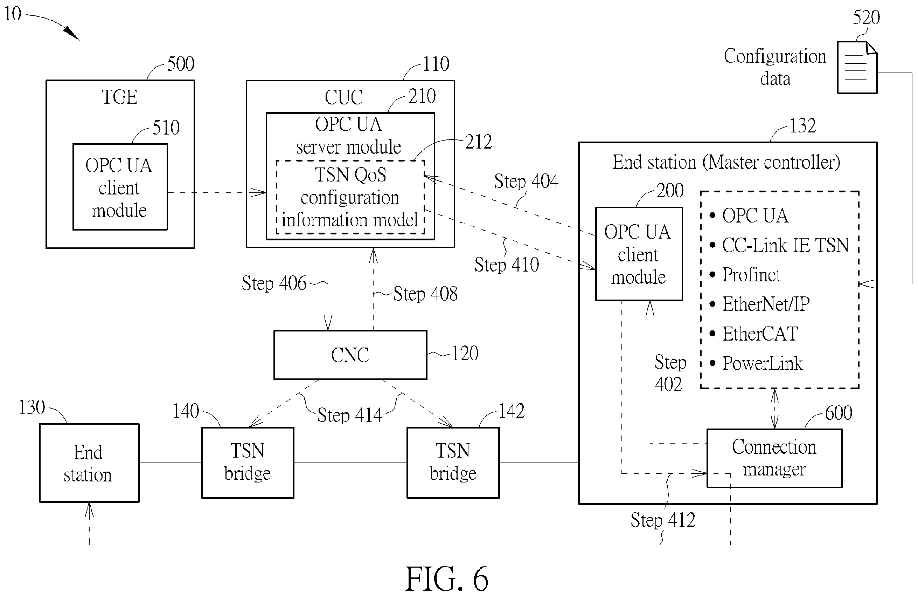

Please refer to FIG. 6, which is a schematic diagram of the TSN system 10 configured through a master controller according to an embodiment of the present invention. As shown in FIG. 6, the OPC UA client module 200 is located in the end station 132. In the present embodiment, the end station 132 is a master controller with an OPC UAFX Connection Manager 600 that is capable of obtaining information of other slave devices and configuring the slave devices, and the end station 130 is the slave device to be configured by the OPC UAFX Connection Manager 600. According to the auto-configuration process 40, in Step 402, the OPC UA client module 200 of the end station 132 obtains a TSN configuration of the stream. Specifically, in this step, the configure data 520 may be imported into the end station 132 first. In the present embodiment, the end station 132 may import the configure data 520 through vendor specific methods or industrial automation protocols such as PROFINET, EtherNet/IP, EtherCAT, CC-Link IE TSN, PowerLink. After importing the configure data 520, the end station 132 may extract the TSN QoS parameters from the OPC UAFX Connection Manager 600. In addition, the TSN QoS parameter may also be collected by the end device 132 from the QoS information of the end station 130 (i.e., slave device corresponding to the master controller) through the OPC UAFX Connection Manager 600. Accordingly, the end station 132 may convert the TSN QoS parameters to the TSN configuration available for the OPC UA client module 200. Then, the TSN QoS parameters and the network topology are used for obtaining the routing information and scheduling of the streams in Step 404 to Step 410 as describe above. After the CNC 120 successfully arranges the resources for the streams, the master controller (i.e., the end station 132) configures the slave device (i.e., end station 130) on the basis of the obtained routing information and scheduling of the stream from the OPC UA client module 200 through the OPC UAFX connection manager 600 in Step 412. Accordingly, the TSN system 10 may be auto-configured through the end station 132 (as a master controller).

It should be noted, in addition to obtaining the TSN configuration of the stream from the slave device (the end station 130) while the slave device is online, the master controller (the end station 132) may obtain the TSN configuration by importing the configure data 520 while the slave device is offline. Accordingly, it's possible for the CNC 120 to determine the routing path and the scheduling of the stream before all the end stations are online. Therefore, after the slave device is online, the routing information and scheduling of the stream may be immediately deployed thereto.

Note that, in practical applications, both of the scenarios illustrated in FIG. 5 and FIG. 6 usually exist at the same time. In other words, in a TSN system, some end stations may be configured through the engineering tool, while other end stations may be configured through the master controller (i.e., connection manager) . Moreover, there may be more than one engineering tool that operates according to different industrial automation protocols respectively, and there may be more than one master controller operating at the same time to configure different groups of slave devices. In the present invention, the TSN system 10 is compatible with the above situations at the same time, and the TSN QoS configuration information model 212 provides a unified interface (API) that is suitable for the various ways for configuration.

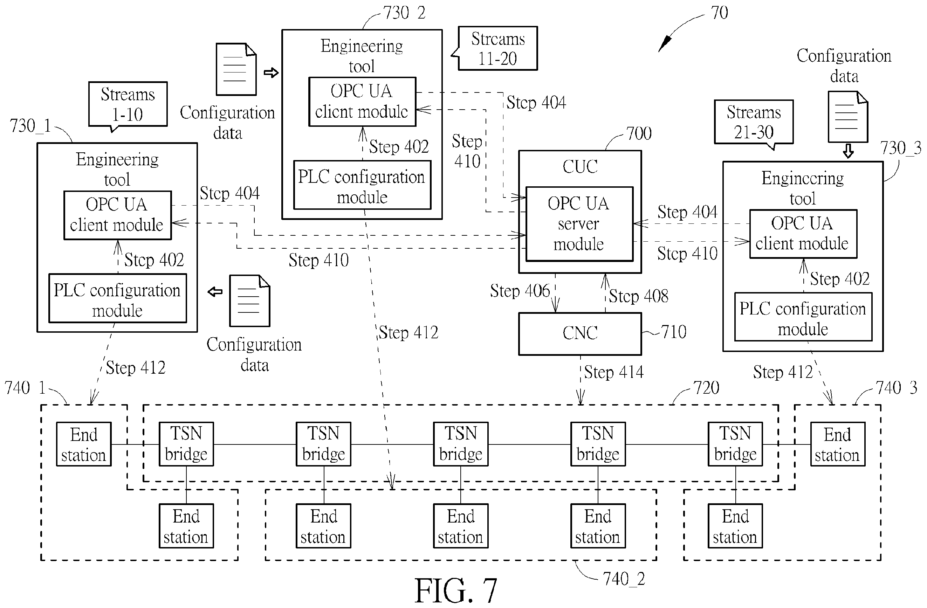

Please refer to FIG. 7, which is a schematic diagram of a TSN system 70 with a plurality of engineering tools according to an embodiment of the present invention. In a practical application, different field devices or controllers may need to be configured by different engineering tools as shown in FIG. 7. The TSN system 70 comprises a CUC 700, a CNC 710, a plurality of TNS bridges 720, a plurality of engineering tools 730_1-730_3, and a plurality of areas 740_1-740_3 composed of a plurality of end stations. The engineering tool 730_1 is responsible for configuring the end stations in the area 740_1, the engineering tool 730_2 is for the end stations in the area 740_2, and the engineering tool 730_3 is for the end stations in the area 740_3. Each of the OPC UA client modules of the engineering tools 730_1-730_3 should provide information for different streams relative to the end stations. For example, the OPC UA client module of the engineering tool 730_1 should provide the TSN QoS parameters for streams 1-10; the engineering tool 730_2 should provide the TSN QoS parameters for streams 11-20; the engineering tool 730_3 should provide the TSN QoS parameters for streams 21-30.

As shown in FIG. 7, the CUC 700 has an OPC UA server module that may be the same as the OPC UA server module 210. In addition, each of the engineering tools 730_1-730_3 has an OPC UA client module and a PLC configuration module. The OPC UA client module may be the same as the OPC UA client module 200 or 510, and communicate with the OPC UA server module of the CUC 700 to exchange the TSN QoS parameters, the routing information and scheduling of the streams. The PLC configuration module may be used to import the configuration data comprising the TSN QoS parameters and configure end stations through OPC UA or other industrial protocols such as PROFINET, EtherNet/IP, EtherCAT, CC-Link IE TSN, PowerLink. In the present invention, the communications between the OPC UA server module of the CUC 700 and the OPC UA client modules of the engineering tools 730_1-730_3 are realized through the APIs defined by the TSN QoS configuration information model described above (not illustrated in FIG. 7).

According to the auto-configuration process 40, the OPC UA client modules of the engineering tools 730_1-730_3 obtain TSN configurations of the streams through the PLC configuration module respectively in Step 402, and then transmit the TSN configurations to the OPC UA server module of the CUC 700 respectively in Step 404. The CUC 700 transmits the TSN configuration and a network topology to the CNC 710 in Step 406 for calculating the routing information and scheduling of the stream in Step 406, and then the CNC 710 returns the calculated routing information and scheduling to the CUC 700 in Step 408. The OPC UA client modules of the engineering tools 730_1-730_3 may send a request to the OPC UA server of the CUC 710 to obtain the routing information and scheduling of the stream in Step 410, and then the engineering tools 730_1-730_3 may configure the end stations in the area 740_1-740_3 through the PLC configuration module respectively in Step 412. Finally, the CNC 710 deploys configurations relative to the routing information and scheduling of the streams to the plurality of TNS bridges 720.

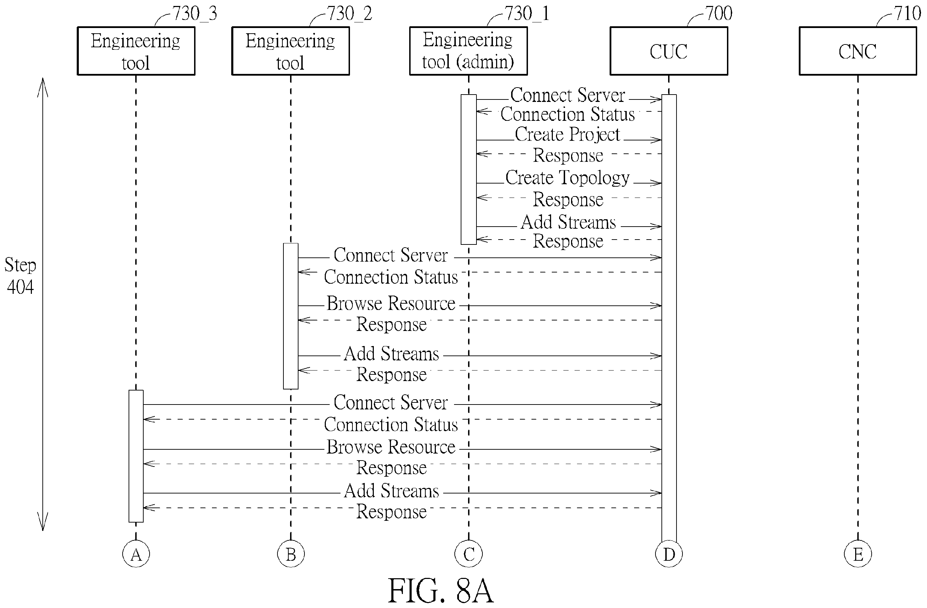

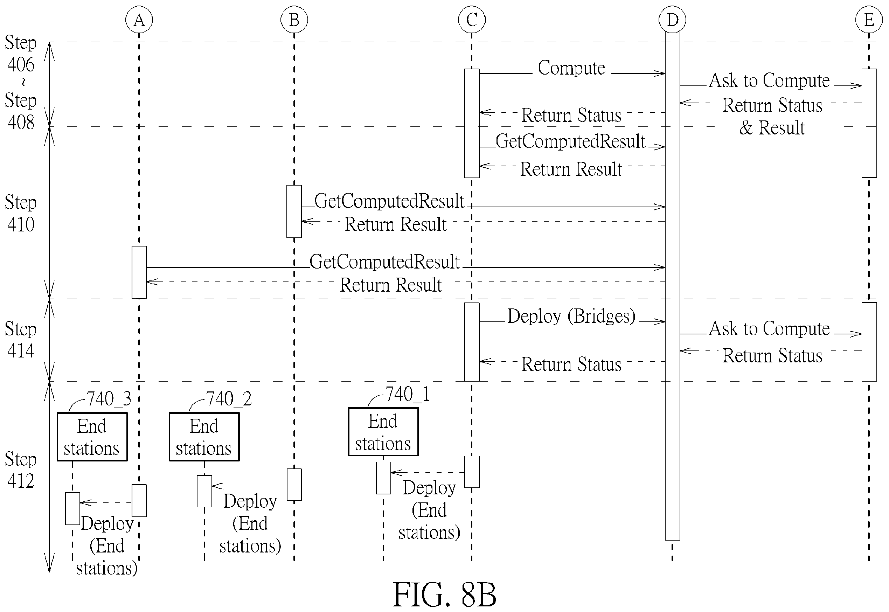

In the TSN system 70, a role based access control (RBAC) security policy could be adopted to realize the interoperation of the OPC UA client modules of the engineering tools 730_1-730_3. One of the OPC UA client modules of the engineering tools 730_1-730_3 may be determined as an administrator being able to access and execute all the methods defined by the TSN QoS configuration information model 212. Please refer to FIG. 8A and FIG. 8B, which is a flowchart of the TSN system executing the auto-configuration process 40 according to an embodiment of the present invention.

As shown in FIG. 8A and FIG. 8B, the OPC UA client module of the engineering tool 730_1 is the administrator that administrates the procedures for the auto-configuration process. In Step 404, the OPC UA client module of the engineering tool 730_1 first connects to the OPC UA server module of the CUC 700 and is responsible for creating the project for TSN QoS configuration and creating the network topology of the TSN system 70. After completing the duties of the administrator, the OPC UA client module of the engineering tool 730_1 is able to add the TSN QoS parameters for the streams 1-10. Then, the OPC UA client modules of the engineering tools 730_2 and 730_3 connect to the OPC UA server module and browse the address space to add the TSN QoS parameters for the streams 11-20 and 21-30 to the OPC UA server of the CUC 700 respectively. In Steps 406-408, the administrator (i.e., the OPC UA client module of the engineering tool 730_1) calls the method "compute" to send a request for the TSN control layer to compute the routing information and schedule of the streams. In Step 410, the OPC UA client modules of the engineering tools 730_1-730_3 call the method "GetComputedResult" to send a request for obtaining the routing information and schedule of the streams. Finally, the administrator calls the method "Deploy" to send a request for the TSN control layer to deploy the configurations relative to the routing information and scheduling of the streams to the plurality of TSN bridges 720 in Step 414, and the engineering tools 730_1-730_3 deploy the obtained routing information and scheduling to the end stations in the area 740_1-740_3 through the PLC configuration module thereof respectively.

Accordingly, one of the OPC UA client modules may be an administrator to administrate the auto-configuration process for the scenario with multiple OPC UA client modules, i.e. for the multiple engineering tools. It should be noted that the engineering tools in the present invention may be replaced by the master controller in the TSN system to execute the same procedures. In addition, Steps 402-410 may be executed during the offline state such as planning, design or commission phases of the configuration workflows; however, Steps 412-414, which deploy the routing information and scheduling of the streams, should be executed only when the TSN bridges and the end stations are online.

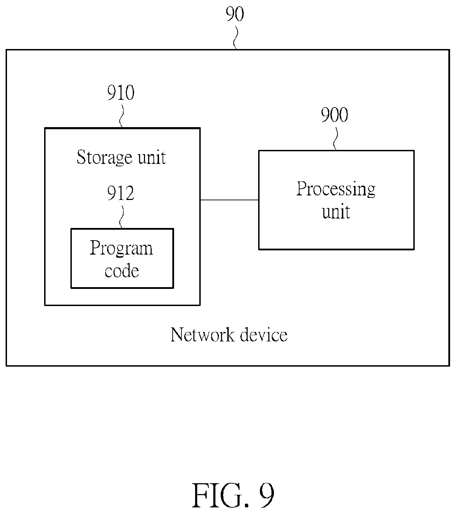

Furthermore, please refer to FIG. 9, which is a schematic diagram of a network device 90 according to an embodiment of the present invention. The network device 90 may be used to implement the engineering tools (such as the engineering tool 100 and the engineering tools 730_1-730_3) or the master controllers (such as the end station 130). As shown in FIG. 9, the network device 90 may comprise a processing unit 900 and a storage unit 910. The processing unit 900 may be a microprocessor or an application-specific integrated circuit (ASIC) . The storage unit 910 may be any type of data storage devices for storing a program code 912, and the program code 912 is read and executed by the processing unit 900. For example, the storage unit 910 may be a read-only memory (ROM), a flash memory, a random-access memory (RAM), a hard disk, an optical data storage device, a non-volatile storage unit, etc., and is not limited thereto.

The network device 90 is used to represent the necessary components required to implement the embodiments of the present invention, and those skilled in the art may make various modifications and adjustments accordingly, and is not limited to this. For example, when the network device 90 is applied to implement the engineering tool 100, the auto-configuration process 40 for the engineering tool may be complied into the program code 912, stored in the storage unit 910, and executed by the processing unit 900. Moreover, the storage unit 910 is also used for storing the data required for running the auto-configuration method for TSN system, and is not limited thereto.

In the prior art, different configuration methods of TSN system have been proposed for the online state, wherein the OPC UA server/client model may be also adopted in the prior art. However, the prior art deploys an OPC UA client in the CUC and deploys OPC UA servers in the end station in general. In this situation, the TSN control layers may only configure the TSN system while the end stations are ready and in the online state. In this regard, the present invention instead deploys the OPC UA server in the CUC and deploys the OPC UA client in the end stations or the engineering tools. Accordingly, the relevant TSN QoS parameters may be collected and sent to the CUC through the device having the information, which is a way for auto-configuration without all devices online.

In summary, the present invention provides a method, device and architecture/system for auto-configuration, wherein a TSN QoS configuration information model provides a unified interface for information exchange. Thus, various configuration methods or industrial automation protocols may be compatible in the same TSN system, facilitating the development and integration of TSN system. Moreover, the routing path and scheduling of TSN streams may be determined according to the TSN configuration off-line during the planning, design and commission phases of the configuration workflows, improving the prior arts.

## Claims

1. An auto-configuration method, used in a time-sensitive networking, called TSN hereinafter, system (10, 70), the auto-configuration method **characterized by** comprising:
obtaining, by a first OPC UA client module (200), a TSN configuration of a stream;
transmitting, by the first OPC UA client module (200), the TSN configuration to an OPC UA server module (210) of a centralized user configuration (110, 700), called CUC hereinafter, in the TSN system (10, 70);
obtaining, by the CUC (110, 700), a routing information and scheduling of the stream according to the TSN configuration and a network topology;
sending, by the first OPC UA client module (200), a request to the OPC UA server module (210) to obtain the routing information and scheduling of the stream; and
configuring the routing information and scheduling of the stream to a plurality of end stations (130, 132, 740_1-740_3) in the TSN system (10, 70).

2. A time-sensitive networking, called TSN hereinafter, system (10, 70) for an auto-configuration method, **characterized by** comprising:
a first OPC UA client module (200);
a centralized user configuration (110, 700), called CUC hereinafter, comprising an OPC UA server module (210); and
a plurality of end stations (130, 132, 740_1-740_3);
wherein the auto-configuration method comprises:
obtaining, by the first OPC UA client module (200), a TSN configuration of a stream;
transmitting, by the first OPC UA client module (200), the TSN configuration to the OPC UA server module (210) of the CUC (110, 700) ;
obtaining, by the CUC (110, 700), a routing information and scheduling of the stream according to the TSN configuration and a network topology;
sending, by the first OPC UA client module (200), a request to the OPC UA server module (210) to obtain the routing information and scheduling of the stream; and
configuring the routing information and scheduling of the stream to the plurality of end stations (130, 132, 740_1-740_3) in the TSN system (10, 70).

3. A network device (100, 132, 730_1-730_3, 90) in a time-sensitive networking, called TSN hereinafter, system (10, 70), configured to have a first OPC UA client module (200), the network device **characterized by** comprising:
a processing unit (900), configured to execute a program code (912); and
a storage unit (910), coupled to the processing unit (900), configured to store the program code (912) to instruct the processing unit (900) to execute an auto-configuration method, wherein the auto-configuration method comprises:
obtaining, by the first OPC UA client module (200), a TSN configuration of a stream;
transmitting, by the first OPC UA client module (200), the TSN configuration to an OPC UA server module (210) of a centralized user configuration (110), called CUC hereinafter, in the TSN system (10, 70);
sending, by the first OPC UA client module (200), a request to the OPC UA server module (210) to obtain routing information and scheduling of the stream; and
configuring the routing information and scheduling of the stream to a plurality of end stations (130, 132, 740_1-740_3) in the TSN system (10, 70).

4. The auto-configuration method of claim 1 or the TSN system (10, 70) of claim 2 or the network device (100, 132, 730_1-730_3) of claim 3, **characterized in that** the auto-configuration method is executed to obtain the routing information and scheduling of the stream off-line and configure the routing information and scheduling of the stream to the plurality of end stations (130, 132, 740_1-740_3) after the plurality of end stations (130, 132, 740_1-740_3) are online.

5. The auto-configuration method of claim 1 or the TSN system (10, 70) of claim 2, **characterized in that** the auto-configuration method further comprises:
transmitting, by a second OPC UA client module (510), the network topology to the OPC UA server module (210) of the CUC (110, 700) in the TSN system (10, 70).

6. The auto-configuration method or the TSN system (10, 70) of claim 5, **characterized in that** the network topology is built by a topology generation entity tool (500).

7. The auto-configuration method of claim 1 or the TSN system (10, 70) of claim 2, **characterized in that** the TSN system further comprises a network device (100, 730_1-730_3) configured as an engineering tool.

8. The network device (100, 730_1-730_3) of claim 3, **characterized in that** the network device (100, 730_1-730_3) is configured as an engineering tool.

9. The auto-configuration method or the TSN system (10, 70) of claim 7, or the network device (100, 730_1-730_3) of claim 8,
**characterized in that** the step of the first OPC UA client module (200) obtaining the TSN configuration of the stream comprises:
importing, by the engineering tool (100, 730_1-730_3), a configuration data (520) comprising an OPC UA configuration descriptor or an IEC/IEEE 60802 digital data sheet; and
converting, by the engineering tool (100, 730_1-730_3), the configuration data (520) into the TSN configuration available for the first OPC UA client module (200).

10. The auto-configuration method or the TSN system (10, 70) of claim 7, or the network device (100, 730_1-730_3) of claim 8,
**characterized in that** the step of configuring the routing information and scheduling of the stream to the plurality of end stations (130, 132, 740_1-740_3) in the TSN system (10, 70) comprises:
configuring, by the engineering tool (100, 730_1-730_3), the routing information and scheduling of the stream to the plurality of end stations (130, 132, 740_1-740_3) through respective protocols comprising PROFINET, EtherNet/IP, EtherCAT, CC-Link IE, PowerLink, Sercos or OPC UA.

11. The auto-configuration method of claim 1 or the TSN system (10, 70) of claim 2, **characterized in that** the first OPC UA client module (200) is deployed in a master controller (132) belonging to the plurality of end stations (130, 132).

12. The network device (132) of claim 3, **characterized in that** the network device (132) is configured as a master controller belonging to the plurality of end stations (130, 132) in the TSN system (10).

13. The auto-configuration method or the TSN system (10) of claim 11, or the network device (132) of claim 12, **characterized in that** the step of the first OPC UA client module (200) obtaining the TSN configuration of the stream comprises:
obtaining, by the master controller (132), QoS information of other slave controllers (130) through OPC UA connection manager (600); and
converting, by the master controller (132), the QoS information into the TSN configuration available for the first OPC UA client module (200).

14. The auto-configuration method or the TSN system (10) of claim 11, or the network device (132) of claim 12, **characterized in that** the step of configuring the routing information and scheduling of the stream to the plurality of end stations (130, 132) in the TSN system (10) comprises:
configuring, by the master controller (132), the routing information and scheduling of the stream to the plurality of end stations (130) through OPC UA connection manager (600).

15. The auto-configuration method of claim 1 or the TSN system (10, 70) of claim 2, **characterized in that** the TSN system (10, 70) further comprises a centralized network configuration (120, 710), called CNC hereinafter, and the step of the CUC (110, 700) obtaining the routing information and scheduling of the stream according to the TSN configuration and the network topology comprises:
transmitting, by the CUC (110, 700), the TSN configuration and the network topology to the CNC (120, 710) according to IEEE 802.1Qdj, representational state transfer, called REST hereinafter, or a vender specific API; and
transmitting, by the CNC (120, 710), the routing information and scheduling of the stream to the CUC (110, 700) according to IEEE 802.1Qdj, REST or the vender specific API.

16. The auto-configuration method or the TSN system (10, 70) of claim 15, **characterized in that** the TSN system (10, 70) further comprises a plurality of TSN bridges (140, 142, 720), and the auto-configuration method further comprises:
deploying, by the CNC (120, 710), configurations relative to the routing information and scheduling of the stream to the plurality of TSN bridges (140, 142, 720) after the plurality of TSN bridges (140, 142, 720) are online.
